Europäisches Patentamt

European Patent Office

Office européen des brevets

(11) Numéro de publication: **0 436 455 A1**

## (12) DEMANDE DE BREVET EUROPEEN

(21) Numéro de dépôt: 90460053.3

(22) Date de dépôt: 26.12.90

(51) Int. Cl.⁵: **A01C 23/00**

(30) Priorité: **05.01.90 FR 9000194**

(43) Date de publication de la demande:
**10.07.91 Bulletin 91/28**

(84) Etats contractants désignés:
**DE GB IT NL**

(71) Demandeur: **ETABLISSEMENTS MAUGUIN SA
B.P. 122, Saint Berthevin Les Laval
F-53006 Laval Cedex(FR)**

(72) Inventeur: **Cornille Bernard La Roseraie
Route de Loiron
F-53230 Cosse-le-Vivien(FR)**
Inventeur: **Mauguin Jean
La Cour d'Ouette
F-53260 Entrammes(FR)**

(74) Mandataire: **Schrimpf, Robert et al
Cabinet Regimbeau 11, rue Franz Heller,
Centre d'Affaires Patton, B.P. 19107
F-35019 Rennes Cédex(FR)**

(54) **Dispositif d'épandage contrôlé de lisier.**

㊗ Ce dispositif, qui équipe une tonne à lisier, comprend un ordinateur embarqué (9), une électrovanne d'épandage (7) à débit réglable, un dispositif (8) de mesure de la vitesse d'avance de la tonne à lisier, des réservoirs (3, 4) contenant des produits réactifs capables de réagir avec l'azote ammoniacal contenu dans le lisier, des moyens (2, 20) pour prélever du lisier dans la tonne, une cuve de réaction étanche (5), un capteur de pression (6) qui fournit à l'ordinateur (9) un signal fonction de la pression de l'azote gazeux dégagé par la réaction, l'ordinateur (9) étant programmé pour régler le débit d'épandage en tenant compte de ce signal et en fonction de la vitesse d'avance de la tonne, de telle façon que le lisier soit épandu avec une teneur en azote prédéterminée et sensiblement constante par unité de surface.

FIG.1

## DISPOSITIF D'EPANDAGE CONTROLE DE LISIER

La présente invention concerne un dispositif d'épandage contrôlé du lisier contenu dans une tonne.

Un critère déterminant de la valeur fertilisante d'un lisier, et en particulier d'un lisier de porc, est sa teneur en azote, et notamment en azote ammoniacal (N/NH4). Il est donc important de connaître la concentration du lisier en azote ammoniacal avant de procéder à son épandage, car cette concentration est la base de la détermination des doses à apporter au terrain.

Si on veut optimiser la qualité de l'épandage, il est donc nécessaire dans un premier temps de mesurer la concentration du lisier en azote ammoniacal ; pour cela on prélève dans la fosse à lisier un échantillon, c'est-à-dire une faible quantité de lisier, et on mesure sa concentration en azote. A cet effet, il a été récemment proposé des dispositifs de mesure spécialement adaptés, tel que celui connu sous le nom commercial "QUANTOFIX" qui utilise un réactif consistant en un mélange d'hypochlorite de sodium et de soude. Le réactif agit sur l'azote ammoniacal pour produire un volume d'azote gazeux dont la pression provoque le déplacement d'un volume d'eau dans une éprouvette graduée ; la graduation est exprimée directement en grammes d'azote par litre de lisier.

A partir du résultat de la mesure, la personne chargée de l'épandage peut en principe déterminer, dans un second temps, la quantité de lisier qu'elle doit épandre par unité de surface, c'est-à-dire le débit d'épandage ; cette détermination se fait au moyen d'abaques élaborés à cet effet, tenant compte d'une part de la nature du sol (et plus précisémment de sa teneur en azote) ainsi que du type de culture qui sera mise en place plus tard sur ce sol.

Une telle méthode est peu précise car le lisier contenu dans la fosse est généralement peu homogène ; elle est de plus très fastidieuse car elle doit être mise en oeuvre à chaque remplissage de la tonne ; c'est pourquoi elle est en fait peu utilisée.

La présente invention se propose de résoudre ces difficultés grâce à un dispositif permettant de réaliser directement l'épandage du lisier avec un taux d'azote par unité de surface correct, c'est-à-dire tenant compte du taux d'azote réellement contenu dans le lisier.

Ce résultat est obtenu dans le dispositif selon l'invention grâce au fait que ce dispositif comprend :

- un ordinateur embarqué ;
- une électrovanne d'épandage à débit réglable, pilotée par l'ordinateur embarqué ;
- un dispositif de mesure de la vitesse d'avance de la tonne au cours de l'épandage, apte à fournir à l'ordinateur embarqué un signal qui est fonction de cette vitesse ;
- des réservoirs contenant des produits réactifs capables de réagir avec l'azote ammoniacal contenu dans le lisier pour le transformer en azote gazeux ;
- des moyens pour prélever du lisier dans la tonne avant l'épandage ;
- une cuve de réaction étanche ;
- des moyens pour amener dans la cuve de réaction, avant l'épandage, des quantités déterminées de lisier et de produits réactifs, afin que s'y produise la réaction ;
- un capteur de pression adapté pour mesurer la pression de l'azote gazeux dégagé par la réaction à l'intérieur de la cuve et pour fournir à l'ordinateur un signal de consigne qui est fonction de la mesure ;
- ledit ordinateur étant programmé pour régler le débit d'épandage en tenant compte de ce signal de consigne et en fonction de la vitesse d'avance, de telle façon que le lisier soit épandu avec une teneur en azote prédéterminée et sensiblement constante, par unité de surface.

Dans un mode préférentiel de mise en oeuvre, l'un des produits réactifs est l'hypochlorite de sodium, avantageusement mélangé à de la soude et dilué dans de l'eau.

Pour cela, le dispositif comporte des réservoirs tampons qui sont destinés à recevoir chacun un volume déterminé de produit réactif ou de lisier en vue de la réaction, ces réservoirs étant reliés à la cuve de réaction par l'intermédiaire d'électrovannes qui sont pilotées par l'ordinateur.

L'invention sera mieux comprise, et ses caractéristiques mises en évidence, grâce à la description détaillée qui suit, faite en référence aux dessins annexés.

Sur ces dessins :

- la figure 1 représente schématiquement, vue de côté, une tonne à lisier équipée d'un dispositif conforme à l'invention ;
- la figure 2 représente en coupe transversale la tonne de la figure 1 ;
- la figure 3 est un schéma du système de mesure de la concentration en azote du lisier contenu dans la tonne ;
- la figure 4 représente par des blocs - diagrammes l'organisation générale ainsi que le fonctionnement du dispositif selon l'invention.

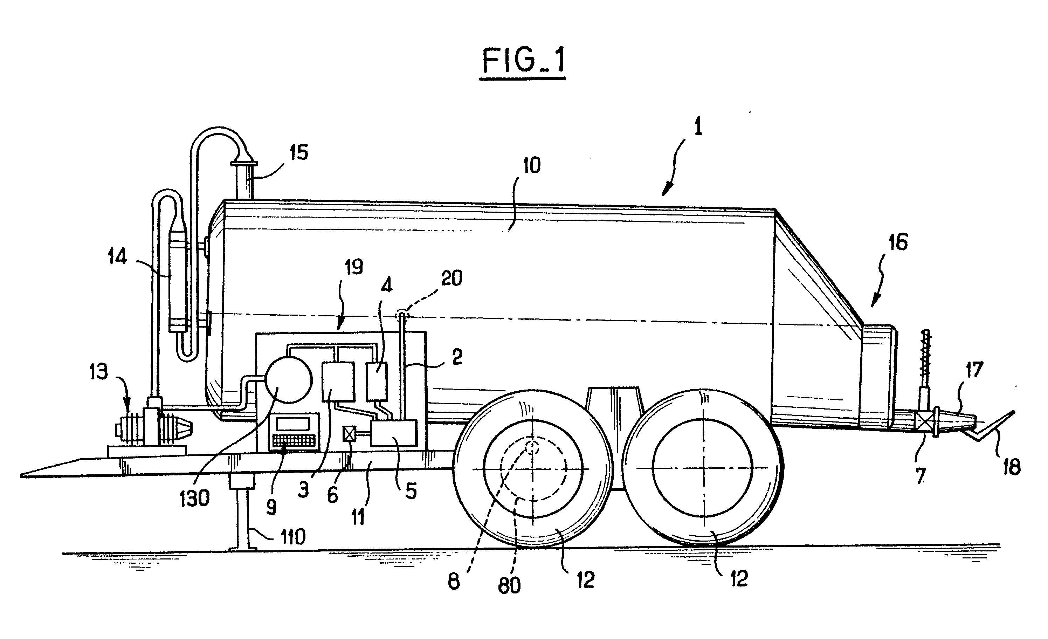

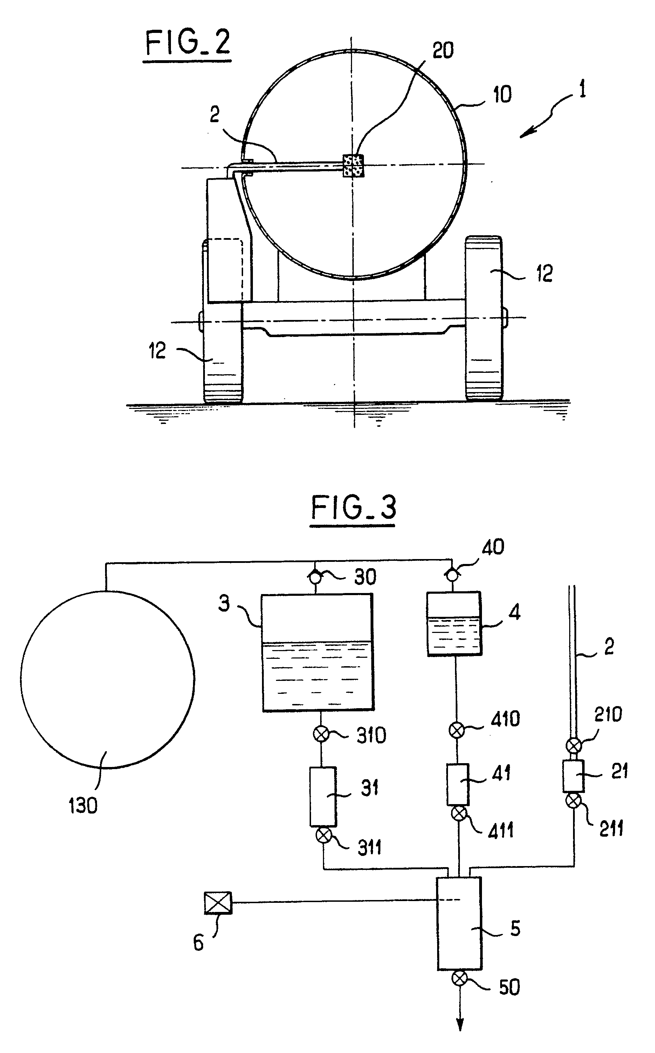

Le dispositif de tonne à lisier 1 représenté sur les figures 1 et 2 comprend une tonne proprement dite ou citerne 10 portée par un châssis 11. Ce châssis est équipé de roues porteuses 12 et est destiné à être attelé à un tracteur. Une béquille 110 permet l'appui de la tonne sur le sol en période de non utilisation.

A la partie avant de la tonne, il est prévu un compresseur pneumatique 13, destiné à être actionné par des organes de commande du tracteur ; ce compresseur communique avec l'intérieur de la tonne 10 par l'intermédiaire de deux systèmes de sécurité anti-retour 14, 15, ceci de manière bien connue.

Toujours de façon connue, à la partie arrière 16 de la tonne est disposée une buse 17 de projection du lisier, qui coopère avec une palette déflectrice 18 destinée à répartir le lisier sur une grande largeur, et de manière régulière au cours de l'épandage. Le débit du lisier quittant la tonne 10 vers la buse 17 est contrôlé par une électrovanne 7 à débit réglable.

Le compresseur 13 est adapté pour mettre la tonne 10 sous dépression, afin d'aspirer le lisier depuis la fosse à lisier à l'intérieur de la tonne 10 avant l'épandage, et au contraire pour mettre sous pression le volume intérieur de la tonne 10 en vue de l'épandage.

Conformément à l'invention, cette tonne est équipée d'un dispositif 19 de contrôle de l'épandage, qui est porté par le châssis 11 et est disposé sur un côté de la tonne. Le dispositif 19 est composé essentiellement d'un réservoir à air comprimé 130 qui est alimenté en permanence par le compresseur 13, de deux réservoirs 3, 4, d'une tubulure 2 pénétrant à l'intérieur de la tonne, une cuve de réaction 5 reliée à un capteur de pression 6, et d'un ordinateur embarqué 9.

Comme on le voit plus particulièrement à la figure 2, la tubulure 2 traverse de manière étanche la paroi de la citerne 10, et son extrémité libre porte une crépine 20 qui est située dans la zone centrale de la citerne, c'est-à-dire sensiblement dans l'axe longitudinal de celle-ci.

L'une des roues 12 est solidaire d'un disque 80 qui porte un ou plusieurs repères magnétiques destinés à coopérer avec un détecteur de proximité de type connu 8, destiné à compter les impulsions produites à chaque passage d'un repère et à émettre un signal qui est fonction de la vitesse de rotation du disque 80, et donc de la roue 12.

Comme on le voit à la figure 3, le réservoir d'air comprimé 130 communique avec chacun des réservoirs 3, 4, par l'intermédiaire de clapets anti-retour 30, respectivement 40.

Le réservoir 3 contient une certaine quantité d'eau, tandis que le réservoir 4 contient un mélange d'hypochlorite de sodium (eau de javel) et de soude.

Les réservoirs 3 et 4 communiquent respectivement avec des réservoirs tampon 31, 41 par l'intermédiaire d'électrovannes 310, 410, tandis que la tubulure 2 communique avec un réservoir tampon 21, également par l'intermédiaire d'une électrovanne 210.

Les volumes des réservoirs tampon 31 et 41 sont respectivement 2 fois et 1,5 fois plus grands que le volume du réservoir tampon 21. Ces volumes correspondent aux proportions adéquates pour une réaction complète des produits réactifs avec le lisier.

Les réservoirs tampon 31, 41 et 21 communiquent eux-mêmes avec une cuve de réation 5, ceci par l'intermédiaire d'électrovanne 311, 411 et, respectivement, 211.

Une électrovanne 50 permet d'évacuer de la cuve 5 les produits issus de la réaction. Cette cuve 5 est reliée à un capteur de pression 6. Ce capteur est par exemple du type commercialisé sous le nom commercial FGP avec la référence P211, adapté pour fournir, par l'intermédiaire d'un amplificateur incorporé, un signal électrique continu dans une gamme de 0 à 5 volts pour une étendue de pression différentielle allant de 0 à 2 bars.

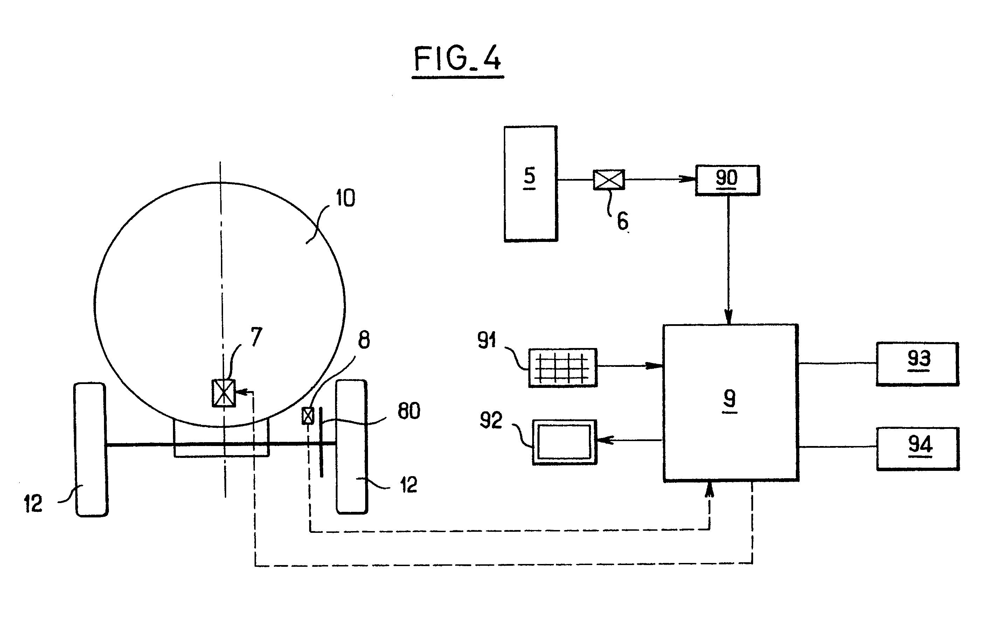

Sur le tableau synoptique de la figure 4, on a représenté schématiquement par blocs les différents composants du dispositif.

Le capteur 6, qui mesure la pression régnant, après réaction, à l'intérieur de la cuve de réaction 5, est branché sur l'ordinateur 9 par l'intermédiaire d'un convertisseur analogique/ numérique 90. L'ordinateur 9 est équipé d'un clavier 91 permettant l'introduction dans la mémoire de l'ordinateur de certains parametres dépendant en particulier de la nature du terrain et du type de culture envisagé. Il est équipé également d'un moniteur (écran d'affichage) 92.

Par ailleurs, l'ordinateur 9 est relié à une interface de puissance 93 dont la fonction est de commander les différentes électrovannes nécessaires au cycle de mesure du taux d'azote, comme cela sera expliqué plus loin. Il est également relié à une interface de communication avec d'autres systèmes informatiques (fichiers de gestion par exemple) ; cette interface de communication est par exemple du type commercialisé sous la référence RS232.

L'ordinateur est enfin relié au capteur 8, dont il reçoit au cours de l'épandage une information sur la vitesse d'avance de la tonne à lisier, et à l'électrovanne 7 dont il pilote le débit de telle sorte que l'épandage se fasse avec une distribution d'azote déterminée par unité de surface.

Nous allons maintenant expliquer de quelle manière fonctionne le dispositif qui vient d'être décrit.

L'usager commence par introduire, grâce au clavier 91, dans la mémoire de l'ordinateur 9 les données relatives aux caractéristiques du terrain (notamment pH) et au type de culture envisagé sur ce terrain, sur lequel va être épandu le lisier en vue de sa fertilisation préalable.

A partir de ces données, selon un programme de calcul préétabli, l'ordinateur détermine quelle est la quantité d'unités, par exemple de kilogrammes, d'azote ammoniacal qui doit être épandu de manière optimale par hectare de terrain. Ainsi, à titre indicatif, pour une culture comme le blé sur un terrain ordinaire, cette quantité est de de 230 kilogrammes par hectare.

L'utilisateur introduit également dans la mémoire de l'ordinateur une information relative à la largeur d'épandage, auquel doit naturellement s'adapter le débit de l'électrovanne 7 pour un taux d'épandage par unité de surface déterminé.

L'utilisateur réalise ensuite de manière classique l'aspiration du lisier depuis une fosse à lisier à l'intérieur de la tonne 10. A la fin du remplissage, le lisier est avantageusement brassé par insuflation d'air comprimé dans la tonne grâce à un mélangeur de type connu (non représenté) disposé à la partie basse de la tonne, sur toute la longueur de celle-ci.

La tonne est ensuite mise sous pression, toujours de manière traditionnelle, la valeur de cette pression étant normalement comprise entre 0,5 et 1,5 bars.

La détermination du taux de lisier en azote ammoniacal va se faire au cours du déplacement de la tonne vers le terrain qui doit être fertilisé.

Grâce à la pression du réservoir à air comprimé 130 d'une part, et à la pression règnant dans la tonne 10, d'autre part, les cuves tampon 31 et 41 d'une part et 21 d'autre part sont tout d'abord approvisionnées en liquide, l'ordinateur ayant piloté l'ouverture, via l'interface de puissance 93, des électrovannes 310, 410 d'une part et 210 d'autre part.

Les cuves tampon 31 et 41 sont donc remplies respectivement d'eau et de produits réactifs à base d'hypochlorite de sodium ; dans le même temps, la cuve tampon 21 est remplie d'une certaine quantité de lisier prélevée au centre de la tonne, l'échantillon prélevé étant par conséquent représentatif du lisier contenu et brassé à l'intérieur de la tonne. De façon temporisée, l'ordinateur pilote ensuite la fermeture des électrovannes 310, 410 et 210 et l'ouverture des électrovannes 311, 411, 211, si bien que les produits contenus dans les réservoirs tampon s'écoulent par gravité dans la cuve de réaction 5.

Il se produit alors dans cette cuve une réaction chimique qui donne naissance à de l'azote gazeux qui emplit la cuve 5. La quantité de molécule d'azote produit, et corrélativement la pression du gaz produit est proportionnelle à la quantité d'azote ammoniacal contenu dans le lisier ; la durée complète de réaction est de l'ordre de quatre minutes ; à ce moment, la pression est mesurée par le capteur 6 qui génère un signal électrique lui-même proportionnel à cette pression.

Cette grandeur est envoyée à l'ordinateur 9, qui en déduit la quantité de lisier qu'il faut épandre par unité de surface dans le terrain concerné.

Ainsi, si le lisier contient 5 kg d'azote ammoniacal par mètre cube, si on reprend l'exemple mentionné plus haut, il sera nécessaire de procéder à l'épandage de 230/5, soit 46 m³/ha de lisier.

L'ordinateur commande ensuite l'ouverture de l'électrovanne 50 de manière à évacuer de la cuve 5 les produits issus de la réaction ; il commande aussi l'ouverture temporaire des vannes 310, 311, de manière à rincer la cuve et la préparer pour la réaction suivante (qui aura lieu au prochain remplissage de la tonne).

Lorsque la tonne est arrivée sur le terrain d'épandage, l'utilisateur agit sur le clavier de l'ordinateur pour que le paramètre de mesure de vitesse réalisée par le système de mesure 8-80 soit utilisé comme donnée d'entrée dans l'ordinateur.

En fonction de la vitesse effective de l'épandage, l'ordinateur pilote alors l'ouverture de l'électrovanne 7. A titre indicatif, la vitesse d'avance de la tonne au cours de l'épandage est de l'ordre de 3 à 7 km à l'heure. Le pilotage de l'électrovanne 7 est tel que le volume de lisier épandu par unité de surface (en l'occurence 46m³ par hectare dans l'exemple cité plus haut) corresponde à l'apport d'azote souhaité (230 kg/ha).

Il est possible, à chaque remplissage de la tonne, et donc à chaque opération d'épandage, de recommencer le cycle qui vient d'être décrit ; l'épandage se fait donc en permanence avec un taux d'azote par unité de surface correct, ceci automatiquement sans que l'usager ait à procéder à des calculs quelconques. Ceci est très important dans la mesure où la concentration en azote ammoniacal de différents lisiers est très variable, cette concentration pouvant même être différente pour une même fosse à lisier, selon qu'on effectue le prélèvement alors que la fosse est bien remplie ou au contraire qu'elle est presque vide.

A titre indicatif, les réservoirs tampon 3 recevant de l'eau et 4 recevant le mélange d'hypochlorite de sodium et de soude auront par exemple des capacités respectives de 30 et de 5 litres, suffisantes pour une journée de travail ; les réservoirs tampon 31, 41 et 21 auront respectivement des capacités de 200, 150 et 100 ml.

Le dispositif selon l'invention peut être monté sur différents types de tonnes à lisier, de volumes divers, soit des tonnes indépendantes destinées à être attelées à un tracteur, comme dans le cas qui vient d'être décrit, soit des tonnes autotractées de grande capacité, à épandage par projection, par rampe de pulvérisation, ou par enfouissage.

L'ordinateur 9 n'est pas nécessairement porté par la tonne, mais pourrait être monté à l'intérieur de la cabine du véhicule tracteur, sans que l'on sorte pour cela du cadre de la présente invention.

Si la tonne est autotractée, il est important que le système de mesure de vitesse 8-80 soit monté sur une roue tractée et non sur une roue motrice (pour éviter les erreurs de mesure de vitesse dues au patinage de la roue sur le sol).

De préférence, les réservoirs 3 et 4 seront équipés chacun d'un détecteur de niveau apte à provoquer une alarme lorsque les niveaux sont insuffisants pour provoquer une réaction complète, ceci pour éviter les erreurs de mesure.

**Revendications**

1. Dispositif d'épandage contrôlé du lisier contenu dans une tonne à lisier, qui comprend :
   - un ordinateur embarqué (9) ;
   - une électrovanne d'épandage (7) à débit règlable, pilotée par l'ordinateur embarqué (9) ;
   - un dispositif (8) de mesure de la vitesse d'avance de la tonne au cours de l'épandage, apte à fournir à l'ordinateur embarqué (9) un signal qui est fonction de cette vitesse ;
   - des réservoirs (3, 4) contenant des produits réactifs capables de réagir avec l'azote ammoniacal contenu dans le lisier pour le transformer en azote gazeux ;
   - des moyens (2, 20) pour prélever du lisier dans la tonne (10) avant l'épandage ;
   - une cuve de réaction étanche (5) ;
   - des moyens (21, 210 ; 31, 310 ; 41, 410) pour amener dans la cuve de réaction (5), avant l'épandage, des quantités déterminées de lisier et de produits réactifs, afin que s'y produise la réaction ;
   - un capteur de pression (6) adapté pour mesurer la pression de l'azote gazeux dégagé par la réaction à l'intérieur de la cuve (5) et pour fournir à l'ordinateur (9) un signal de consigne qui est fonction de la mesure ;
   ledit ordinateur (9) étant programmé pour régler le débit d'épandage en tenant compte de ce signal de consigne et en fonction de la vitesse d'avance, de telle façon que le lisier soit épandu avec une teneur en azote prédéterminée et sensiblement constante, par unité de surface.

2. Dispositif selon la revendication 1, caractérisé en ce que l'un des produits réactifs est l'hypochlorite de sodium.

3. Dispositif selon la revendication 2, caractérisé en ce que l'hypochlorite de sodium est mélangé à de la soude.

4. Dispositif selon l'une des revendications 2 ou 3, caractérisé en ce que l'hypochlorite de sodium est dilué dans de l'eau contenue dans l'un (3) des réservoirs, cette eau servant aussi à rincer la cuve de réaction (5) après chaque opération.

5. Dispositif selon l'une des revendications 1 à 4, caractérisé en ce qu il comporte des réservoirs tampon (31, 41 ; 21) destinés à recevoir chacun un volume déterminé de produit réactif ou de lisier en vue de la réaction, ces réservoirs étant reliés à la cuve de réaction par l'intermédiaire d'électrovannes pilotées par l'ordinateur (9).

6. Dispositif selon l'une des revendications 1 à 5, caractérisé en ce qu il comporte une électrovanne (50) apte à permettre l'évacuation de l'azote gazeux hors de la cuve de réaction (5).

7. Dispositif selon l'une des revendications 1 à 6, caractérisé en ce que le prélèvement du lisier est réalisé dans la zone centrale de la tonne (10), par l'intermédiaire d'une crépine (20).

FIG_1

EP 0 436 455 A1

FIG_2

FIG_3

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | WO-A-8 204 128 (ENGLUND)<br>* page 3, lignes 4 - 36 ** page 7, ligne 15 - page 8, ligne 18; figures 1-3 *<br>— — — | 1,2 | A 01<br>C 23/00 |
| A | DE-C-3 719 671 (BAYWA)<br>* colonne 4, ligne 40 - colonne 6, ligne 1; figures 1-2 *<br>— — — | 1 | |
| A | FR-A-2 548 861 (VAN DER LELY)<br>* page 14, ligne 13 - page 15, ligne 20; revendications 1-6; figure 12 *<br>— — — — — | 1 | |

|  |
|---|
| **DOMAINES TECHNIQUES RECHERCHES (Int. Cl.5)**<br><br>A 01 C |

Le présent rapport de recherche a été établi pour toutes les revendications

| Lieu de la recherche | Date d'achèvement de la recherche | Examinateur |
|---|---|---|
| La Haye | 11 avril 91 | HERYGERS J.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant